(19) **Europäisches Patentamt**
**European Patent Office**
**Office européen des brevets**

(11) **EP 1 699 304 B1**

(12) **EUROPEAN PATENT SPECIFICATION**

(45) Date of publication and mention
of the grant of the patent:
**17.09.2008 Bulletin 2008/38**

(51) Int Cl.:
***A23P 1/08*** (2006.01)

(21) Application number: **04798066.9**

(22) Date of filing: **23.11.2004**

(86) International application number:
**PCT/EP2004/013327**

(87) International publication number:
**WO 2005/063059 (14.07.2005 Gazette 2005/28)**

(54) **EDIBLE BARRIER**

ESSBARE TRENNSCHICHT

BARRIÈRE CONSOMMABLE

(84) Designated Contracting States:
**AT BE BG CH CY CZ DE DK EE ES FI FR GB GR HU IE IS IT LI LU MC NL PL PT RO SE SI SK TR**

(30) Priority: **23.12.2003 EP 03079171**

(43) Date of publication of application:
**13.09.2006 Bulletin 2006/37**

(73) Proprietors:
• **Unilever N.V.**
**3013 AL Rotterdam (NL)**
Designated Contracting States:
**AT BE BG CH CZ DE DK EE ES FI FR GR HU IS IT LI LU MC NL PL PT RO SE SI SK TR**
• **Unilever PLC**
**London**
**Greater London EC4P 4BQ (GB)**
Designated Contracting States:
**CY GB IE**

(72) Inventors:
• **BEVERS, Loes Elizabeth**
**2611 EZ Delft (NL)**
• **BOUWENS, Elisabeth, Cornelia, Maria**
**3133 AT Vlaardingen (NL)**

• **VAN DER HIJDEN, Hendrikus Theodorus Wilhelmus M.**
**3133 AT Vlaardingen (NL)**
• **RAVESTEIN, Peter**
**3133 AT Vlaardingen (NL)**

(74) Representative: **Kan, Jacob Hendrik**
**Unilever Patent Group**
**Olivier van Noortlaan 120**
**3133 AT Vlaardingen (NL)**

(56) References cited:
**EP-A- 0 328 317          WO-A-92/01394**
**US-A- 4 661 359          US-A- 4 672 034**
**US-A1- 2002 004 089**

• **THAKUR B R ET AL: "CHEMISTRY AND USES OF PECTIN - A REVIEW" CRITICAL REVIEWS IN FOOD SCIENCE AND NUTRITION, BOCA RATON, FL, US, vol. 37, 1997, pages 47-73, XP009024042 ISSN: 1040-8398**
• **THARANATHAN R N: "Biodegradable films and composite coatings: past, present and future" TRENDS IN FOOD SCIENCE AND TECHNOLOGY, ELSEVIER SCIENCE PUBLISHERS, GB, vol. 14, no. 3, March 2003 (2003-03), pages 71-78, XP004421201 ISSN: 0924-2244**

Description

## FIELD OF THE INVENTION

The invention relates to a barrier. More in particular the invention relates to an edible moisture or flavour barrier suitable for use in food products, comprising a cross-linked biopolymer and a lipid material.

## BACKGROUND OF THE INVENTION

Migration of moisture and flavour in food products forms a serious problem because it negatively affects the appearance, taste, freshness, shelf life and consumer satisfaction. In order to prevent such migration, edible barrier materials have been proposed. Currently available edible moisture barrier technology is not suitable for effectively stopping moisture migration in composite food products during shelf life. Lipid material based moisture barriers lack physical strength and flexibility and cannot withstand elevated temperatures during processing. Hydrocolloid-based edible films potentially have better tensile strength, but are not very effective because of their hydrophilic nature. Upon drying, hydrocolloid films tend to become rather brittle and hence lose their superior physical properties. Combinations of hydrocolloid and lipid films have been applied in alternating layers (laminate) to take advantage of both systems, but require complex and expensive processing.

Thus, there is still a need for alternative or improved edible barrier suitable for use in food products.

It is therefore an object of the invention to provide an edible barrier suitable for use in food products, which does not have one or more of the above mentioned drawbacks.

It was now surprisingly found that the above object of the invention may be achieved by the edible barrier of the invention, which is suitable for use in food products, and comprises a cross-linked biopolymer and a lipid material, said edible barrier having a thickness of about 2 to 1,500 micrometer. Preferably, the biopolymer is a cross-linked pectin, chitosan or starch.

Moreover, the temperature stability of the barrier was found to be excellent, they are stable from -20°C tot 150°C, freeze thaw stable and cooking and frying stable.

WO02/071870 (Unilever) discloses a foamed product wherein cross-linked pectin is homogeneously incorporated, as in food product such as mousse or an ice cream.

The earlier, not pre-published WO04/000041 (Unilever) discloses a method of preparing stable oil in water emulsions wherein a ferulyolated compound is at least partly oxidized during or after formation of the oil in water emulsion.

Documents US-A-4,661,359 and EP-A-0328317 disclose edible barriers suitable for use in food products.

## DEFINITION OF THE INVENTION

According to a first aspect of the invention, there is provided an edible barrier suitable for use in food products, comprising a cross-linked biopolymer and a lipid material, said edible barrier having a thickness of about 2 to 1,500 micrometer, and the lipid material is an edible oil, fat or wax.

According to a second aspect of the invention, there is provided a composite food product comprising parts having different water activities (aw), separated by the barrier material according to the invention.

## DETAILED DESCRIPTION OF THE INVENTION

The edible barrier according to the present invention comprises a cross-linked biopolymer and a lipid material, said edible barrier having a thickness of about 2 to 1,500 micrometer. The barrier forms a film that can be used to prevent migration of moisture or flavour from one part of a food product to another part. It has been found that films comprising such cross-linked biopolymers have a high physical strength. If the biopolymers are hydrocolloids, the films have surprisingly good adhering properties to a wide range of food matrices. The hydrocolloid films form effective aroma barriers. Barrier films with a high lipid content are very effective in inhibiting moisture migration. The lipid binding capacity of the film can be further enhanced by hydrophobic modification, i.e. by attaching hydrophobic groups to the cross-linked polymers.

It was found to be especially attractive to apply enzymatic cross-link technology to stop water and/or flavour migration from ingredients. In this technique, ferulyolated pectin or ferulyolated biopolymers or vanillin attached biopolymers such as chitosan-vanillin are covalently cross-linked.

It was found to be possible to enhance the physical strength of the edible barrier film via cross-linking of the hydrocolloid polymers and to exploit this increased strength in combination with a high lipid binding capacity of the film due to strong interactions between the hydrocolloid network and lipids. Moreover, the chemical properties of the hydrocolloids allow strong adherence to a wide range of ingredient surfaces.

Certain biopolymers containing ferulic acid groups attached to their backbone are known to be gellable by oxidation. An example of these polymers is pectin from a limited number of plant sources. The gelling may be achieved by addition of an appropriate amount of an enzyme of the oxidase type, e.g. laccase or peroxidase. The ingredients of the application may contain these enzymes which allows the process to occur without addition of exogeneous enzymes. Moisture barriers can play an important role to enhance product quality during storage of composite food products. Thermodynamic instability of small molecules in different compartments of the composite food product drives migration into other compartments. The resulting migration of moisture, flavour and colour causes deterioration of the sensory properties of the different parts of the composite food product. Application of the new barrier technology at the surface of ingredients inhibits water, flavour and colour migration resulting in a better consistency of the ingredients and hence overall quality of the product.

**Table 1**

|  | film forming properties | physical strength | lipid binding capacity | moisture barrier properties | aroma barrier properties |
|---|---|---|---|---|---|
| Hydrocolloids | ++ | - | - | - | + |
| Cross-linked hydrocolloids | +++ | +++ | + | - | ++ |
| Entangled lipids | ++ | ++ |  | +++ | - |
| Covalently linked lipids | ++ | ++ | +++ | + | - |
| Covalently linked + entangled lipids | ++ | ++ | +++ | ++++ | - |

The invention regards the composition and preparation of an edible moisture barrier material. Such barrier consists of a network of at least (covalently) coupled hydrocolloids. Covalent coupling can be accomplished by means of cross-linking agents like epichlorohydrin. Alternatively, covalent coupling can be achieved via an oxidation reaction of polyphenolic groups (e.g. ferulic acid residues) which leads to gel formation or at least increased viscosity of the aqueous phase. The gel forming capacity of e.g. pectins is for example described in WO-A-98/22513 and WO-A-00/40098 and WO-A-96/03440.

Ferulic acid groups (4-hydroxy-3-methoxy-cinnamyl - groups) are known to be capable of cross-linking in the presence of certain oxidants (e.g. Oosterveld et al; oxidative cross-linking of pectic polysaccharides from sugar beet pulp, Carbohydrate Research 328; 199-207, 2000). The 4-hydroxyl-3-methoxy-benzene part is the functional moiety of ferulic acid that is involved in the oxidative cross-linking reaction. And hence cross-links can be established between molecules with this type of (ortho-methoxy-) phenolic group. In the oxidation process a new covalent bond is formed between two individual ferulic or other phenolic groups.

The term oxidant is used to indicate an oxidising agent, which can be either a chemical oxidising agent or an enzyme. An enzyme can be used alone or in combination with a co-oxidant such as hydrogen peroxide.

The compound comprising ferulyolated (or similar ortho-mentoxyphenolic) groups is preferably a polymer, more preferably a polysaccharide. Examples of suitable polymers include pectin, chitosan, arabinan, galactan, cellulose derivatives, galactomannans such as guar gum, locust bean gum, starches or other polymers comprising hydroxyl groups which can be esterified to a ferulic acid group. Alternatively ortho-methoxy-phenolic can be covalently coupled to the carbohydrate backbone. The polymers comprising ferulic acid groups can be naturally occurring or synthesised polymers. Examples of naturally occurring polymers with ferulic acid groups are sugar beet pectin and arabinoxylanes isolated from cereals. Synthetic processes to prepare polymers with ferulic acid groups generally include esterification of ferulic acid to a free hydroxyl group situated on the polymer backbone or on a sugar substituent.

Alternatively, a phenolic group can be introduced in the polymer chain via an imine bond between an amine group in the polymer and an aldehyde function in the phenolic compound, as in e.g. chitosan and vanillin.

In a highly preferred embodiment, the ferulyolated compound is a pectin, even more preferred sugar beet pectin. The principal building units of pectin are smooth homogalacturonic regions and rhamnified hairy regions in which most neutral sugars are located. Arabinose is the predominant neutral sugar. Galactose is present in rhamnogalacturonan. 50-55% of the ferulic acid groups are linked to arabinose units and about 45-50% of the ferulic acid groups are linked to galactose residues. Preferably, 15 to 80% of all ferulic acid groups are oxidised in the final emulsion, after oxidation.

It is preferred that the majority of ferulic acid groups is not oxidised before the oxidation during gel formation. Even more preferred before gel formation at most 10% of all ferulic acid groups are oxidised.

In another preferred embodiment the polymer is chitosan with covalently coupled vanillin moieties. The coupling of vanillin to the chitosan backbone can be achieved via a Schiff base.

In yet another embodiment, the polymer is cross-linked starch. It is also possible to use a cross-linked protein, or a cross-linked combination of one or more proteins and one or more carbohydrates.

The edible barrier according to the invention includes a lipid material and the oxidation of the ferulyolated polymers leads to network formation whereby the dispersed lipid phase is trapped as an o/w emulsion-layer. The lipid composition is dependent on the type of product and its processing conditions. The lipid material can be any edible oil fat or wax and is preferably selected from the group comprising sunflower oil, coconut oil, butter fat, rapeseed oil, olive oil, peanut oil or oils extracted from plant or flower material such as rose oil, and combinations thereof. Also fractionated oils and waxes are encompassed in the invention.

The oxidation may be accomplished by the action of a powerful chemical oxidant such as potassium periodate, potassium permanganate, or potassium ferricyanide.

Alternatively, the oxidation can be accomplished by use of an oxidising enzyme such as a peroxidase, a polyphenol oxidase e.g. catechol oxidase, tyrosinase, or a laccase. Peroxidases can be divided into those originating from plants, such as tomato peroxidase, fungi or bacteria and those originating from a mammalian source. Laccases are obtainable from a variety of microbial sources notably bacteria and fungi (including filamentous fungi and yeasts), and suitable examples of laccases include those obtainable from strains of Aspergillus, Neurospora (e.g. N. crassa), Prodospora, Botrytis, Collybia, Fomes, Lentinus, Pleurotus, Trametes (some species/strains of which are known by various names and/or have previously been classified differently), Polyporus, Rhizoctonia, Coprinus, Psatyrella, Myceliophtora, Schytalidium, Phlebia or Coriolus.

Preferred enzymes are selected from the group consisting of tomato peroxidase, horseradish peroxidase, soy bean peroxidase and laccases that show a redox potential of preferably more than 450 mV as described in E. Solomon et al, Chem Rev, 1996, p 2563-2605.

In case an enzymatic oxidising system is applied, the enzyme is preferably added in the form of a solution or a dispersion in an aqueous buffer system. The enzymes cited above are suitable enzymes. Some enzymes, such as peroxidases require the presence of a co-oxidant such as hydrogen peroxide for their activity. The co-oxidant is preferably added separately from the enzyme that requires its presence.

The amount of enzyme added is expressed in terms of activity units. Preferably, the enzyme is present in excess. The amount of enzyme added is preferably such that fast cross-linking occurs. For a peroxidase the amount of enzyme added is preferably from 10 to 100,000 units ABTS activity per ml of liquid. In some food ingredients like e.g. fruits and vegetables, the enzyme is endogeneously present and needs lower or no external addition.

The oxidation is preferably carried out at a temperature of from -20°C to 80°C, preferably 4°C to 70°C. It will be appreciated that the best temperature depends on the oxidation system that has been chosen.

According to another embodiment the oxidising agent is added to the aqueous phase which already comprises ferulyolated compound, while the enzyme is endogenously present.

The amount of ferulyolated compound is preferably from 0.5 to 2 wt% (g ferulic acid per 100g pectin). The amount of ferulyolated compound as a stock solution which is used for a barrier is preferably from 6 to 10 wt% (g ferulyolated compound per 100ml solvent). The solution can be sprayed or applied as such at the surface of the ingredient / product. Alternatively the ferulyolated compound is first applied and secondly a layer of enzyme/ oxidising agent is added. Preferably, the layer is dried in an oven or grill after the solution (barrier) is applied and before the ingredients are used for the final product. The barrier can also be applied as dry powder which is a mixture of ferulyolated compound and oxidising agent(s). Hydrogen peroxide can be added in solution or can be generated in situ by means of glucose/ glucose oxidase addition.

Food products wherein the barrier may suitably be used are preferably selected from the group consisting of leaking (moisture or flavour or oil) ingredients such as vegetables (tomato, salad), fruit, bread, fish and meat. The format of the ingredient can range from native to pulp, dried gelled etc.

The barrier may further comprises optional ingredients such as protein, salt, flavour, anti-microbials, components, colourants, emulsifiers, acidifying agents, (co)-oxidants such as hydrogen peroxide, and the like.

In order to achieve effective moisture barrier properties, the barrier contains a lipid material, such as lipids entangled in the matrix. The hydrophobicity of the barrier may also be increased by attaching lipid molecules to the polymer backbone. Attaching lipid moieties can be accomplished by covalent linkage of glycerol moieties containing one or two fatty acid chains and a ferulic acid, esterified to one of the glycerol hydroxyl groups to the polymer backbone. Alternatively, gossypol can be attached to the polymer backbone via oxidative coupling. Fatty acids can be directly bound to the polymer backbone by esterification (cf esterified starch). Alternatively, the hydrophobic moiety can be covalently coupled to the polysaccharide backbone by any covalent coupling reaction known in the art (e.g. Schiff base coupling).

A higher lipid content of the film can be achieved by incorporation of lipid material in the hydrophobically modified polymer as described above.

The invention will be further illustrated in the following nonlimiting examples.

**Example 1**

Moisture barrier films

Materials:

Sugar beet pectin was obtained CP Kelco, GmbH, batch genu β pectin. Chitosan and sodium caseinate were obtained from van Erven BV. Soybean peroxidase and vanillin were obtained from Quest. Peroxidase is a non-GM, food grade Biobake Wheat from Quest, the Netherlands. The cofactor hydrogen peroxide used is 30% solution of Merck, Germany. Glucose oxidase, non-GM, food grade from Amano in combination with glucose and Biobake wheat were used for some examples. Novozym 435 lipase and pectinex ultra SP-L were obtained from Novozymes. Beeswax, carnauba wax and ethylferulate were obtained from Sigma Aldrich Chemicals. Solid fats MGLA41, coco nut oil, PO58 flakes, and RPLE70 were obtained from W.T. Hogervorst, SCC, URDV. All other chemicals used were obtained from Merck.

Film components: Chitosan modified with vanillin (Chitosan-V)

Synthesis A

Vanillin was dissolved in 97% Ethanol and chitosan powder was added to this solution. The resulting suspension was incubated for 1 hour up to 7 days at 65°C, 200 rpm. The ratio chitosan: vanillin (w/w) varied in a range between 2: 1 up to 500:1 and the amount of ethanol used, was adjusted to maintain a moving suspension. After the incubation, the suspension was filtered and the filtrate was washed with ethanol to remove free vanillin. Finally the filtrate was dried on air.

Synthesis B

Chitosan (0.8 g) was dissolved in 90 ml of 2% acetic acid-methanol (1:2, v/v). A solution of 2,75 g vanillin in 10 ml methanol was added and the mixture was incubated for 24 hours up to 7 days at room temperature to obtain a yellow hydrogel. The gel was dried and washed with water and methanol several times to remove free vanillin.

Analysis: The degree of vanillin substitution was calculated via the average molecular mass of a chitosan-monomer based on a total N-determination. The following formulas were used:

$$N(g/g) \ = \ M_N/M_{polymer}$$

N (g/g) is experimentally determined and $M_N$ is known →calculate $M_{polymer}$

$$M_{polymer} = \ (v*M_{chitosan\ monomer} \ + \ M_{vanillin})/v$$

$M_{vanillin}$ and unmodified $M_{chitosan}$ monomer are known → calculate v (degree of vanilisation)

$$v \ = \ M_{vanillin}/(M_{polymer} - M_{chitosan\ monomer})$$

Besides an element analysis, modified chitosan was also unsuccessfully analysed by MALDI-TOF MS. The chitosan molecules were too large and molecular weights were too divers to obtain reliable results.

Sodium caseinate modified with vanillin (Na-cas-V).

200g sodium-caseinate was added to a solution of 7g vanillin in 4 litre demineralised water, pH adjusted to 7.5. The solution was cooled to -80°C and freeze dried for approximately 10 days at 100 mbar. Yellow powder was obtained and subsequently dissolved in 2l demineralised water. Then 2l ethanol was added to the solution to precipitate the protein and separate it from free vanillin. The resulting suspension was centrifuged for 20 minutes at 4,500 rpm. If the supernatant was still turbid after centrifugation, the pH was further decreased to pH 4 and centrifugation was repeated. After centrifugation the pellet (modified protein) was cooled to -80°C and freeze-dried for another 2 days to obtain dry product.

Feruoylated triglycerides (FG)

Synthesis: 40 g of sunflower seed oil and 3.5 g ethylferulate were dried for approximately 16 hours on blue silica. After this drying step, ethylferulate was dissolved in the dried sunflower seed oil and 3.5 g lipase (Novozyme 435) was suspended into this solution. The mixture was sealed and incubated at 65°C, 200 rpm for 7 days. Subsequently the mixture was separated on a silica gel 60 extra pure (Merck) column with an eluens increasing in polarity. The first fractions were eluted with petroleum ether: diethyl ether (v/v) 4:1 followed by ratios 7:3, 3:2 and finally only diethylether was used. In total 12 fractions of each approximately 200 ml were collected and the eluens was evaporated to obtain concentrated fractions for analysis.

Analysis:

TLC: 10 μl of each fraction was analysed on TLC. The samples were pipetted on a silica glass plate and eluted with toluene:diethylether (v/v) 4:1. The silica plate was dried on air and components containing ferulic groups were identified by UV fluorescence.
HPLC: Fractions were analysed on a C18 HPLC column with an isocratic flow of 40/60 (v/v) acetone (containing 1% glacial acetic acid) / acetonitrile. Samples were prepared by dissolving 10 μl of each fraction in 1 ml acetone and remove all solid particles by filtration over a silica gel 60 extra pure column. As a control, HPLC spectra of ferulic acid, ethylferulate, oleic acid and glycerol were recorded. The presence of ferulic residues was monitored by UV-detection at 325nm and the presence of lipid components was monitored at 360nm. A reference (detection of components) was monitored at 450nm. All fractions that contained the feruoylated glycerides were combined.
LC-MS-MS: All measurements were carried out on the Quattro-II using HPLC-MS and MS-MS in positive electrospray mode. To support the ionisation, ammonium acetate was added post-column. More details are given in Appendix I.

Activity assay (ABTS assay)

Add 100 μl 20 mM ABTS (2,2'-azino-bis(3-ethylbenzothiazoline-6-sulfonic acid (ABTS) stock solution made in indicated buffer) to 880 μl 25 mM phosphate buffer, pH 6.0. Incubate for 5' at 30°C. Add 10 μl 100 mM hydrogen peroxide. Start the reaction by addition of 10 μl enzyme (diluted in such a way that a linear curve could be measured). Measure the formation of ABTS radical at 414nm using a spectrophotometer. Specific activity is defined as: μmol ABTS oxidised per minute per mg protein at pH 6.0

Polymer modified with feruoylated glycerides

Synthesis

The amount of feruoylated glycerides that was used for the coupling reaction to the polymer could be varied in different molar ratios. The following formulas were used for calculating these molar ratios:

$$\text{Chitosan-V (g)} / M_{polymer} = \text{Chitosan-V (mol)}$$

$$\text{Chitosan-V (mol)} / v = \text{bound vanillin (mol)}$$

$$\text{Ratio FG:vanillin} * \text{bound vanillin (mol)} = \text{FG (mol)}$$

The desired amount of FG's was dissolved in ethanol and slowly added to the stirred polymer solution. Subsequently enzyme was added, also during mixing and finally peroxide to start the cross-linking reaction. Amounts of enzyme and peroxide are dependent on the nature and concentration of the polymer and are described in more detail in paragraph 3.2. When the modified polymer was used as an emulsifier, the final percentage of pectin had to be lower than 1% and chitosan-V had to be lower than 0.25% to prevent gelation of the solution.

Analysis

TLC analysis was used to monitor the coupling reaction. Before and after addition of the peroxide, 15 $\mu$l sample was analysed on a silica plate. Spots were eluted with toluene:diethylether (v/v) 4:1 and the disappearance of free FG spots was used as an indicator for a successful coupling reaction.

Fatty acid analysis was used to examine the coupling product of the polymer and the modified triglycerides. After the coupling reaction, 0.75 ml of the reaction product was separated from any free FG left on TLC with eluens toluene:diethylether (v/v) 4:1. The lowest spot containing the modified polymer was extracted from the silica in a acetic acid buffer pH 5.5 and 0.01 g lipase (Novozyme 435) was added. After incubation for 2 hours at 65°C, 900 rpm, the mixture was centrifuged. The supernatant was concentrated by evaporation and a free fatty acid analysis NEFA-C, ACS-ACOD method (Wako) was performed.

Functional test

Emulsifying properties of the modified polymer were used as a functional test to check whether the FG was successfully coupled to the polymer backbone. For this analysis 10$\mu$l FG was dissolved in 1 ml EtOH and added to a 3ml chitosan-V solution to finally obtain a 0.125% chitosan-V, 25% EtOH, 0.0625% acetic acid solution. During mixing, 2.5 10$\mu$l pox was added and finally 10$\mu$l peroxide to start the cross-linking reaction. The mixture was incubated for 5 minutes at room temperature and subsequently 1ml of the solution was added to 2ml sunflower seed oil containing 1% b-carotene. The mixture was vortexed for 1 minute at maximum speed and the stabilisation of the resulting emulsion was monitored during 48 hours. Emulsions were analysed at various intervals with Light Microscopy (LM).

Films

Film synthesis

All films were based on a cross-linked gel that was cast onto a Teflon coated glass plate, aluminium mould of 5*5 cm and 0.3-2.5 mm depth, or a plastic weighing cup. These cast gels were dried into an incubator at 50°C, an air oven or at room temperature. Gel synthesis of three types of films, (cross-linked, hydrophobic entangled and hydrophobic covalent modification) will be described in the following three paragraphs.

Cross-linked films

Pectin solutions were made by dissolving pectin in water (max 9% w/w) and adjusting the pH during stirring with 1 M NaOH to pH 5.5. Chitosan-V was dissolved in 1% acetic acid (max 2% w/w) and the pH was also adjusted with NaOH to pH 5-5.5. An amount of soybean peroxidase (enzyme) was added to the polymer solution during stirring and finally the peroxide was added to start the cross-linking reaction.

Hydrophobic entangled gels

Hydrophobic entangled gels were synthesised by adding the hydrophobic component to the polymer solution and turrax the mixture for 1 minute to obtain a homogeneous emulsion. If a solid fat or wax was used, the mixture was heated in a water bath before turraxing, to melt the solid component. Solutions containing protein, sterols, ethanol, glycerol (1% gel volume) or emulsifiers (tween 80, span 80, lecithin 1% gel volume) were also added to the polymer solution/emulsion during turraxing.

An overview of used hydrophobic components is shown in table 2.1. When all components were mixed, enzyme was added and finally peroxide to start the cross-linking reaction. Denatured protein films were obtained by heating the protein containing gel at 95°C for 30 minutes to denature present proteins. Some films contained digested chitosan-V polymer. For this purpose, the polymer was incubated with pectinex, a pectinase enzyme, for 2 hrs at 37°C.

**Table 2.1** *Overview of various hydrophobic components in hydrophobic entangled films*

| Polymer | Liquid oil | Solid fat (fatty acid) | Wax | Protein solution | Sterol |
|---|---|---|---|---|---|
| Chitosan-V 10:5 0.5 - 2% | Sunflower seed oil Olive oil | MGLA41 Coco nut oil PO58 Flakes RPLE70 Oleic oil Lauric acid | Beeswax Carnauba wax | Nacaseinate -(V) egg protein | γ-oryzanol β-sitosterol |
| Chitosan-V 10:1 0.5 - 2% | Sunflower seed oil | Oleic acid | Beeswax | - | γ-oryzanol β-sitosterol |
| Pectin 2 - 4% | Sunflower seed oil Olive oil | Coco nut oil PO58 Flakes RPLE70 Oleic oil | Beeswax Carnauba wax | Na-caseinate -(V) egg protein | γ-oryzanol β-sitosterol |
| Chitosan-V 10:5 Pectinex digested | Sunflower seed oil | Coco nut oil PO58 Flakes RPLE70 | Beeswax | Na-caseinate | - |

Covalently coupled gels

Covalently modified polymer gels were synthesised according to the same protocols as hydrophobic entangled films, only the solution/mixture added to the polymer during turrax contained a component with a phenolic group that could be recognised by the soybean peroxidase. In table 2.2, three components are listed that were used in covalently modified films and various combinations.

**Table 2.2** *Overview of covalently coupled hydrophobic components in films*

| Compound | Solvent | In combination with |
|---|---|---|
| Na-caseinate-V | $H_2O$ (pH 7.5) | Lipid, fat, Feruoylated Glycerides |
| γ-oryzanol | Ethanol | Lipid |
| Feruoylated glycerids | Ethanol | Lipid, fat, wax, Na-caseinate (V) |

**Film characterisation**

After film synthesis, all intact, smooth films were analysed by a water vapour permeability assay. Films that gave good results were subsequently tested for their solubility and swelling percentage and finally some films were analysed with light microscopy. Protocols for these assays are described in the following part.

**Water Vapour Permeability (WVP) assay**

The water vapour permeability was determined by gravimetrical analysis. Cups with a diameter of 2 cm$^2$ were filled with 10 ml demineralised water and sealed with a piece of film. The films were completely sealed to the cup with parafilm or wax and were weighted to determine initial weight. Cups were places in a dessicator filled with dried blue silica to create a relative humidity gradient of 0% in the dessicator up to 100% within the cups. During 4-12 days, weight loss of the sealed cups was determined and plotted against time. Slopes of these weight loss curves (g/day) were compared to the slope of the unsealed cup and this number was considered as relative water vapour permeability. Experiments showed that this slope did not changed significantly between day 2 to 5. After 5 days, the silica started to get saturated and was replaced by dry silica.

Thickness

Film thickness was measured with a digital thickness measurement (Mitutoyo) to the nearest 0.01mm at 10 random positions. An average of the 10 values was used to calculate film thickness.

Film swelling and solubility test

A piece of film sized 1 cm x 1 cm was cut and dried in an oven at 90°C for 3 hours and weighted to obtain the initial dry weight. The piece of film was placed into a Falcon test tube, containing 10 ml demineralised water. The tube was incubated at 37°C, 100 rpm for 24 hours. After incubation, the content of the test tube was filtered and total weight of the pre-weighted filter and film was determined to obtain a total swelling percentage according to the following formula:

$$Sw\% = [(\text{weight wet film + filter} - \text{weight wet filter})/\text{initial weight film}] . 100\% -100\%\%$$

Subsequently, the wet filter and film were dried in an air oven at 90°C for 3 hours and weighted again. Total film solubility was determined according to the following formula:

$$Sol\% = 100\% - [(\text{dry weight film+filter} - \text{dry weight filter})/\text{initial weight film}]. 100\%$$

Microscopy

Films and emulsions were examined with light microscopy. Film samples were prepared by cutting a piece of film sized 2.5 mm x 2.5 mm, placing it on an object glass and sealing the cover glass with colourless nailpolish. For the emulsion samples, 0.1 ml of the stable emulsion was pipetted onto the object glass and sealed with a cover glass. Both samples were examined with enlargements of 10x, 20x and 40x.

**Films**

**Film synthesis**

Films were synthesised as described above with various components in different combinations and concentration ranges. In table 3.1 applied enzyme and peroxide concentrations are mentioned that were used for the various polymer solutions. Higher concentrations of peroxide were used for chitosan cross-linking, because more covalent bonds could be formed between the vanillin side chains (reaction mechanism 1.2.1). On the contrary, enzyme concentrations were lower compared to pectin cross-linking because of a higher rate of chitosan gel formation. Besides amounts, the order of component addition appeared to be very important. Various experiments had indicated that it was crucial to add enzyme before peroxide during chitosan cross-linking. If peroxide was added before the enzyme, polymer gelation did not occur. In table 3.2 an overview is given of concentration ranges of various film components that were found to result in stable films.

**Table 3.1** *Overview of polymer solutions and enzyme and peroxide concentrations in gels*

| Polymer solution | Concentration stabile gel and dried film | 10% Enzyme solution ($\mu$l/ml gel) | 1 M $H_2O_2$ ($\mu$l/ml gel) |
|---|---|---|---|
| Chitosan-V (10:5)* | 0.5%-2% | 0.1 | 5-20 |
| Chitosan-V (10:1) | 0.5%-2% | 0.1 | 5-20 |
| Chitosan-V (10:0.2) | 0.5%-2% | 0.1 | 5-20 |
| Pectin | 2%-4% | 1 | 0.5-8 |
| * w/w ratio chitosan:vanillin during chitosan-V synthesis | | | |

**Table 3.2**

| Overview of concentration ranges of various components to obtain stable films | | | | | | |
|---|---|---|---|---|---|---|
| Polymer | Liquid oil % gel volume | Fatty acid % gel volume | Solid fat % dr wt film | Wax % dr wt film | Protein solution % dr wt film | Ethanol % gel volume |
| Chitosan-V 10:5 0.5-2% | 0-30% | 0-30% | 0-80% | 0-80% | 0-80% | 0 - 67% |
| Chitosan-V 10:1 0.5 - 2% | 0-5% | 0-5% | 0 - 80% | | | 0 - 67% |
| Pectin 2-4% | 0-5% | 0-5% | 0 - 80% | 0 - 80% | 0-80% | 0 - 67% |
| Chitosan-V 10:5 Pectinex digested | 0-5% | 0-5% | 0 - 80% | 0 - 80% | | 0 - 67% |

Various synthesised films were divided into films containing entangled components and films that were covalently modified.

**Additives:**

To make the film more flexible, glycerol 400μl or 800μl glycerol was added before turraxing. To promote formation of the emulsion, emulsifiers were added to the reaction mixture before turraxing. Various amounts of mono/di glycerides and lecithin were used as emulsifiers. To decrease the water vapour permeability of the films, additional hydrophobic compounds were added to the chitosan-vanillin solution before turraxing. For example films were made containing β-sitosterol and γ-oryzanol. The last compound is a mixture of sterols esterified to ferulic acid. These compounds could also be cross-linked by the enzyme to the chitosan network and increase the hydrophobicity and network complexity, thereby decreasing the water vapour permeability. In addition, ferulic acid transesterified to triglycerid (mono or di ferulic glycerides) can also be covalently cross-linked to the polymer network to increase the hydrophobicity and water vapour permeability.

**Film properties**

In the introduction, three ways were described to obtain a water barrier film using cross-linking technology. The same format will be used to describe results of water barrier properties of various synthesised films. Hydrophobic components were added and finally hydrophobic components were covalently bound to the polymer backbone to increase hydrophobicity.

*Hydrophobic entanglement*

Several films with hydrophobic entangled components like oil, fats and waxes were synthesised and analysed in a water vapour permeability assay and solubility test. Besides film thickness, the concentration of hydrophobic component was also crucial for the water vapour permeability properties of the tested films. When the concentration hydrophobic entangled component was increased, the water barrier properties were increased significantly.

In table 4 an overview is given of some water vapour permeability assays in which pectin and chitosan films with or without hydrophobic entangled components were tested. In the table a the large difference between normal polymer films and films containing entangled oil is shown. A water vapour permeability value of almost zero was reached with pectin films containing oleic acid, having a thickness around 1 mm. The same trend was observed for films containing entangled wax and/or solid fat. It is also clear that the wax/fat and oil containing films obtained very similar barrier properties.

**Table 4**

| Overview WVP analysis |
|---|
| NB. - Percentages are v/v gel volume |

(continued)

| Overview WVP analysis | | |
|---|---|---|
| - Ratio's are w/w dry weight film<br>- Films are based on 20 ml 2% polymer gel<br>- Unless mentioned different addition FG: 0.5 ml | | |
| **Film Composition** | **Thickness** | **relative water vapour permeability** |
| Pectin | 0.060 | 1.0000 |
| chitosan-vanillin | 0.060 | 1.0000 |
| | | |
| pectin, 10% SO | 0.915 | 0.1154 |
| pectin, 20% SO | 1.313 | 0.0385 |
| pectin, 10% SO | 0.419 | 0.2642 |
| pectin, 10% SO | 0.915 | 0.2264 |
| pectin, 7.5% SO | 0.434 | 0.2639 |
| pectin, 2.5% SO | 0.437 | 0.2500 |
| Chit-V 10% SO | 0.612 | 0.2639 |
| Chit-V | 0.696 | 0.1944 |
| Chit-V 30% SO | 0.324 | 0.2778 |
| Chit-V 20% SO + 0.12 emulsifier | 0.313 | 0.2786 |
| pectin 1% SO + oryzanol-16:1 | 0.207 | 0.2556 |
| Chit-V 20% SO + 20% EtOH | 0.337 | 0.2556 |
| Chit-V + 20% SO + beta-sitosterol 16:1 dry wt. | 0.337 | 0.2778 |
| Chit-V + 20% SO + beta-sitosterol 16:1 dry wt | 0.444 | 0.2778 |
| pectin + carnauba dry wt 1:2 | 0.437 | 0.2444 |
| Chit-V 1% SO + beeswax dry wt 2:1 | 0.311 | 0.2360 |
| chit-V 1% SO + 20% EtOH | 0.177 | 0.2809 |
| Chit-V 1% SO + oryzanol 16:1 dry wt | 0.178 | 0.2697 |
| Chit-V 1% SO + oryzanol 10.6:1 dry wt | 0.202 | 0.2584 |
| Chit-V 1% SO + 2.5 ml 3% NA-cas-V | 0.215 | 0.2809 |
| Chit-V 1% SO + 1 ml 3% NA-cas-V | 0.19 | 0.2921 |
| Chit-V 1% SO + 5 ml 3% NA-cas-V | 0.232 | 0.2809 |
| Chit-V 1% SO + 2.5 ml 3% NA-cas-V | 0.282 | 0.2921 |
| pectin + 9% SO + 1 ml 3% Na-cas-V + 20% EtOH | 0.207 | 0.2035 |
| pectin+ 10% OO + 20% EtOH | 0.15 | 0.2124 |
| pectin+ 10% SO + 20% EtOH | 0.217 | 0.1947 |
| pectin+ 10% SO | 0.205 | 0.1858 |
| Chit-V + 20% SO | 0.424 | 0.2475 |
| Chit-V + 20% SO + FG | 0.464 | 0.2574 |
| Chit-V+0.4 g coco (EtOH) +10% SO | 0.236 | 0.2482 |
| Chit-V+0.4 gr BW+ 2.5 ml EtOH+10%SO | 0.321 | 0.2774 |

(continued)

| Film Composition | Thickness | relative water vapour permeability |
|---|---|---|
| Chit-V+0.4gr PO50+ETOH+10% | 0.297 | 0.2628 |
| Chit-V+ 1g BW + tween | 0.177 | 0.2828 |
| Chit-V + 2.5 g BW + FG | 0.4 | 0.2727 |
| Pectin + 10% oleic acid | 1.457 | 0.0149 |
| Pectin + 7.5% oleic acid | 0.948 | 0.0373 |
| Chit-V + 1.25 g BW + 1.25g PO58 + FG (1ml) | 0.36 | 0.2462 |
| Chit-V + 2.5g BW + FG (1 ml) | 0.528 | 0.2462 |
| Chit-V + 2.5g coco + FG (1.5 ml) | 0.416 | 0.1791 |

Results of solubility analyses.

A large difference was observed between chitosan and pectin films. Pectin films showed high solubility compared to chitosan films. When hydrophobic components were added, a decrease was observed in film solubility. This effect was the same for both polymer films, only chitosan films reached significantly lower solubility values. Addition of protein had the opposite effect; in general film solubility was increased when protein concentration increased.

**Example 2**

Cheese - Yeast extract

A new savoury spread, consisting of cheese and yeast extract or vegetable protein hydrolysate, with an original two coloured appearance was developed. Over time, however, colour migration caused serious appearance problem. Water migration occurred from the high water containing cheese (aw =+/- 0.8) to the low water containing yeast extract (aw =0.2-0.4). Besides water migration, also the dark brown yeast extract colour migrates into the cheese phase, leading to one large brown coloured transition layer between the two components. An edible layer was used to prevent dye and water migration. Chitosan films containing up to 50% lipid appeared to be very successful. Based on these results, it can be concluded that chitosan with a high lipid content can prevent water migration between two components with different water activities.

The Method for preparation of Chitosan-Vanillin films:

Chitosan-vanillin film containing 20% (v/v) sunflower seed oil: 5 ml sunflower seed oil was added to 20 ml 2% Chitosan-vanillin solution in 1% acetic acid which was adjusted to pH 4.5 with NaOH. The solution was emulsified with an ultra-turrax T25 (9,500 min$^{-1}$) for 5 minutes and during mixing add 2 $\mu$l enzyme (soy peroxidase). When the enzyme was homogeneously distributed 20 $\mu$l 1M $H_2O_2$ was added. The solution was immediately cast on a Teflon-coated glass plate. The film is dried at 50°C and peeled of from the glass plate.
The lipid content can vary from 0% up to 50%.
Instead of sunflower seed oil, films were also synthesised containing various amounts of olive oil and oleic acid.

**Example 3**

**Salami sausages**

Due to its adhering properties it is not possible to form a homogeneous layer covering the complete sausage surface with non-cross-linked pectin. The use of cross-linked pectin, however, resulted in a film with amazingly good surface adherence properties, probably due to covalent interaction between pectin molecules and tyrosine groups of proteins located on the sausage surface.
The pectin layer was applied on the sausage by dipping it into a 4% pectin solution containing enzyme (1ml/ 100ml) and 25% ethanol. Ethanol will decrease drying time and at the same time increase solution viscosity, which promotes the adherence of the gel onto the sausage. Subsequently the dipped sausage was sprayed with a solution containing 1 mM peroxide and 2% pectin (maximum concentration for spraying device) and dried in a hot air oven for 4 hrs at 40°C. The appearance of the pectin coated sausage is the same as the uncoated one.

The coated and uncoated sausages were tested on their lipid/water release at room temperature and after 10 minutes incubation at 100°C. The uncoated sausages lost oil which was visible on a supporting paper tissue, whereas the coated sausage did not lose any oil under the same conditions.

## Example 4

### Edible coating on biscuits

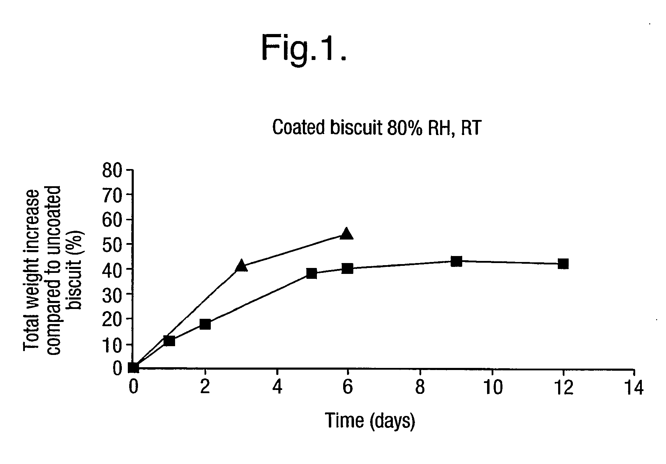

Biscuits were coated with cross-linked pectin-films and cross-linked chitosan films containing lauric acid. Samples were placed in a dessicator at RT containing a saturated NaCl solution (80% RH). The weight increase due to water adsorption was measured as a function of time. The results are shown in Figure 1. During the first 6 days, the weight increase of chitosan-coated biscuit (squares) was significantly lower than the weight increase of the pectin coated biscuit (triangles).

## Example 5

### Films of vanillin coupled Chitosan mixed with lipid

A chitosan-vanillin (ChitV) solution was prepared as described earlier (synthesis B). The concentration of ChitV in the produced ChitV-solution was 3%. Synthesis of ferulyolated tri-and diglycerides (FG) was described earlier.

Film Synthesis:

A homogeneous emulsion was prepared by mixing the ChitV solution with sunflower oil and/or wax (Cotebar A from Loders Croklaan was used), and in some cases with ferulyolated tri-and diglycerides (FG) or Hymono 8903 (highly saturated monoglycerides from Quest). Mixing was done at high speed using an Ultra-Turrax for 1-5 minutes.

If waxes were used, they were melted first and the other components and the equipment used were warmed up in an oven before they could come in contact with the molten wax. Then enzyme (soybean peroxidase, Biobake from Quest) is added and after homogeneous distribution the cross-linking reaction is started with the addition of 1M hydrogen peroxide stock solution. For a 6g-film 15$\mu$l (~2.5M) were used. To see if the amount of hydrogen peroxide in the film is high enough for gelling, an indicator paper was used. The amount of enzyme and $H_2O_2$ varied with the amount of starting material. Thin film layers on gelbond$^®$ film (from FMC Bioproduct, USA) which is a agarose coated polyester, which were dried on air or in the oven for several hours between 65°C and 100°C (conditions are shown in Table 5). After drying the thickness of the films was measured and the water vapour permeability was measured. Results of the permeability (P) and the relative water vapour permeability (WVP) of different Chitosan-vanillin/lipid films are given in Table 5. The different compositions of the films are given in %wt/wt of wet films (composition before drying).

Table 5

| Film no./dry ing conditions | % 3%Chi tosan | % SF | % Cotebar A | % FG | Hymono % | d [mm] | P [e$^{-11}$ g/ (s*m*Pa)] ] | Rel. WVP [%] |
|---|---|---|---|---|---|---|---|---|
| 1. | 59.2 | 19.7 | 19.7 | 1.3 | 0 | 0.25 | 6.64 | 5.19 |
| 2. | 59.2 | 19.7 | 19.7 | 1.3 | 0 | 0.62 | 7.61 | 4.80 |
| 3./4h 100°C | 59.2 | 19.7 | 19.7 | 1.3 | 0 | 0.36 | 3.49 | 1.55 |
| 4./4h 100°C | 59.2 | 19.7 | 19.7 | 1.3 | 0 | 0.09 | 2.00 | 3.55 |
| 5./4h 100°C | 59.2 | 19.7 | 19.7 | 1.3 | 0 | 0.55 | 7.29 | 2.11 |
| 6. | 42.3 | 35.5 | 1.1 | 21.1 | 0 | 0.43 | 8.72 | 5.01 |
| 7./4h 100°C | 59.2 | 39.5 | 1.3 | 0 | 0 | 0.54 | 7.83 | 3.58 |

(continued)

| Film no./dry ing conditions | % 3%Chi tosan | % SF | % Cotebar A | % FG | Hymono % | d [mm] | P [e$^{-11}$ g/ (s*m*Pa)] ] | Rel. WVP [%] |
|---|---|---|---|---|---|---|---|---|
| 8./24h 65°C | 60 | 20 | 20 | 0 | 0 | 0.37 | 9.13 | 4.2 |
| 9./ | 59.7 | 19.9 | 19.9 | 0 | 0.5 | 0.50 | 7.65 | 2.01 |
| 10. | 59.7 | 19.9 | 19.9 | 0 | 0.5 | 0.06 | 6.08 | n.d. |
| 11 | 60 | 40 | 0 | 0 | 0 | 0.18 | 6.19 | n.d. |
| 12./25% EtOH | 65 | 10 | 0 | 0 | 0 | 0.06 | 6.48 | n.d. |
| n.d. is not determined | | | | | | | | |

The water vapour permeability measurements show that the chitosan-vanillin/lipid films had very good P-values thus a very low permeability.

**Claims**

1.    Edible barrier suitable for use in food products, comprising a cross-linked biopolymer and a lipid material, said edible barrier having a thickness of about 2 to 1,500 micrometer, whereby said lipid material is an edible oil, fat or wax.

2.    Barrier according to claim 1, wherein the biopolymer is a hydrocolloid based biopolymer.

3.    Barrier according to claim 2, wherein the hydrocolloid based biopolymer contains ortho-methoxy-phenolic groups.

4.    Barrier according to claim 3, wherein the hydrocolloid based biopolymer contains ferulic acid groups.

5.    Barrier according to any one of the preceding claims, wherein the biopolymer is a pectin.

6.    Barrier according to any one of the preceding claims, having a thickness of about 10 to 500 micrometer.

7.    Barrier according to claim 6, having a thickness of about 50 to 200 micrometer.

8.    Barrier according to any one of the preceding claims, wherein the cross-linked biopolymer is hydrophobically modified.

9.    Barrier according to any one of the preceding claims, wherein the compound is a modified polymer which contains ferulic acid and one or two fatty acid chains coupled to a vanillin coupled polymer as e.g. chitosan.

10.    Barrier according to any of the preceding claims wherein the cross-linked biopolymer is crosslinked to a protein or a vanillin coupled protein (e.g. casein-vanillin)

11.    Composite food product comprising parts having different water activities (aw), separated by the barrier according to any one of the preceding claims.

12.    Food product comprising an edible barrier according to claims 1-10, covering a food ingredient selected from the group consisting of vegetables, fruit, bread, and fish.

13.    Process for the preparation of a food product, wherein parts having different water activities (aw), are separated by the barrier according any one of claims 1-10.

14.    Process according to claim 13, wherein the cross-linking is carried out by an enzyme or enzymatic system.

15.    Process according to claim 14, wherein this enzyme system is already present in situ, e.g. tomato peroxidase in tomatoes.

**Patentansprüche**

1. Essbare Trennschicht, die zur Verwendung in Nahrungsmittelprodukten geeignet ist, umfassend ein vernetztes Biopolymer und ein Lipidmaterial, wobei die essbare Trennschicht eine Dicke von etwa 2 bis 1500 Mikrometer hat, wobei das Lipidmaterial ein essbares Öl, Fett oder Wachs ist.

2. Trennschicht nach Anspruch 1, wobei das Biopolymer ein Hydrocolloid-basiertes Biopolymer ist.

3. Trennschicht nach Anspruch 2, wobei das Hydrocolloid-basierte Biopolymer ortho-Methoxy-phenol-Gruppen enthält.

4. Trennschicht nach Anspruch 3, wobei das Hydrocolloid-basierte Biopolymer Ferula-säure-Gruppen enthält.

5. Trennschicht nach einem der vorangehenden Ansprüche, wobei das Biopolymer ein Pectin ist.

6. Trennschicht nach einem der vorangehenden Ansprüche, die eine Dicke von etwa 10 bis 500 Mikrometer hat.

7. Trennschicht nach Anspruch 6, die eine Dicke von etwa 50 bis 200 Mikrometer hat.

8. Trennschicht nach einem der vorangehenden Ansprüche, wobei das vernetzte Biopolymer hydrophob modifiziert ist.

9. Trennschicht nach einem der vorangehenden Ansprüche, wobei die Verbindung ein modifiziertes Polymer ist, welches Ferula-Säure und eine oder zwei Fettsäureketten, gekoppelt an ein Vanillin-gekoppeltes Polymer, wie zum Beispiel Chitosan, enthält.

10. Trennschicht nach einem der vorangehenden Ansprüche, wobei das vernetzte Biopolymer an ein Protein oder ein Vanillin-gekoppeltes Protein (z. B. Casein-Vanillin) vernetzt ist.

11. Verbundnahrungsmittelprodukt, umfassend Teile mit unterschiedlichen Wasseraktivitäten (aw), getrennt durch die Trennschicht nach einem der vorangehenden Ansprüche.

12. Nahrungsmittelprodukt, umfassend eine essbare Trennschicht nach einem der Ansprüche 1 bis 10, die ein Nahrungsmittel-Ingrediens, ausgewählt aus der Gruppe, bestehend aus Gemüsen, Früchten, Brot und Fisch, bedeckt.

13. Verfahren zur Herstellung eines Nahrungsmittelprodukts, bei dem Teile, die unterschiedliche Wasseraktivitäten (aw) haben, durch die Trennschicht nach einem der Ansprüche 1 bis 10 getrennt werden.

14. Verfahren nach Anspruch 13, wobei die Vernetzung durch ein Enzym oder ein enzymatisches System durchgeführt wird.

15. Verfahren nach Anspruch 14, wobei dieses Enzymsystem bereits in situ vorliegt, zum Beispiel Tomatenperoxidase in Tomaten.

**Revendications**

1. Barrière comestible appropriée pour être utilisée dans les produits alimentaires, comprenant un biopolymère réticulé et une substance lipidique, ladite barrière comestible possédant une épaisseur d'environ 2 à 1 500 micromètres, dans laquelle ladite substance lipidique est une huile, une graisse ou une cire comestible.

2. Barrière selon la revendication 1, dans laquelle le biopolymère est un biopolymère à base d'hydrocolloïde.

3. Barrière selon la revendication 2, dans laquelle le biopolymère à base d'hydrocolloïde contient des groupes ortho-méthoxy-phénoliques.

4. Barrière selon la revendication 3, dans laquelle le biopolymère à base d'hydrocolloïde contient des groupes acide férulique.

5. Barrière selon l'une quelconque des revendications précédentes, dans laquelle le biopolymère est une pectine.

6. Barrière selon l'une quelconque des revendications précédentes, possédant une épaisseur d'environ 10 à 500 micromètres.

7. Barrière selon la revendication 6, possédant une épaisseur d'environ 50 à 200 micromètres.

8. Barrière selon l'une quelconque des revendications précédentes, dans laquelle le biopolymère réticulé est hydrophobiquement modifié.

9. Barrière selon l'une quelconque des revendications précédentes, dans laquelle le composé est un polymère modifié contenant de l'acide férulique et une ou deux chaînes d'acides gras couplées à un polymère couplé à la vanilline comme, par exemple, le chitosane.

10. Barrière selon l'une quelconque des revendications précédentes, dans laquelle le biopolymère réticulé est réticulé à une protéine ou à une protéine couplée à la vanilline (par exemple, la caséine-vanilline).

11. Produit alimentaire composite comprenant des parties ayant différentes activités d'eau (aw), séparées par la barrière selon l'une quelconque des revendications précédentes.

12. Produit alimentaire comprenant une barrière comestible selon les revendications 1 à 10, recouvrant un ingrédient alimentaire choisi dans le groupe constitué par les légumes, les fruits, le pain et les poissons.

13. Procédé de préparation d'un produit alimentaire, dans lequel des parties ayant différentes activités d'eau (aw) sont séparées par la barrière selon l'une quelconque des revendications 1 à 10.

14. Procédé selon la revendication 13, dans lequel la réticulation est réalisée par une enzyme ou un système enzymatique.

15. Procédé selon la revendication 14, dans lequel ce système enzymatique est déjà présent in situ, par exemple la peroxydase de tomate dans les tomates.

# Fig.1.

Coated biscuit 80% RH, RT

## REFERENCES CITED IN THE DESCRIPTION

### Patent documents cited in the description

- WO 02071870 A
- WO 04000041 A
- US 4661359 A
- EP 0328317 A
- WO 9822513 A
- WO 0040098 A
- WO 9603440 A

### Non-patent literature cited in the description

- *Carbohydrate Research,* 2000, vol. 328, 199-207
- **E. SOLOMON et al.** *Chem Rev,* 1996, 2563-2605